# EUROPEAN PATENT APPLICATION

(11) **EP 4 716 118 A1**
(43) Date of publication of application: **25.03.2026**
(21) Application number: 25202059.9
(22) Date of filing: 15.09.2025
(51) Int. Cl.: H04B 17/345, H04L 5/00

(54) **METHOD AND APPARATUS FOR COUNTING RESOURCES FOR L1-CLI REPORTING**

(30) Priority: 24.09.2024 US 202463698355 P; 30.07.2025 US 202519285575
(71) Applicant: Samsung Electronics Co., Ltd., Suwon-si, Gyeonggi-do 16677 (KR)
(72) Inventor: AWADIN, Mohamed, San Jose, CA 95134 (US); BAE, Jung Hyun, San Jose, CA 95134 (US)
(74) Representative: Kuhnen & Wacker Patent- und Rechtsanwaltsbüro PartG mbB

(57) **Abstract**

Methods and devices of a wireless system are provided. A UE communicates (120, 130), to a base station configured for SBFD, one or more L1-CLI reporting capabilities and one or more L3-CLI reporting capabilities, the one or more L1-CLI reporting capabilities including a maximum number of supported L1-CLI measurement resources, and the one or more L3-CLI reporting capabilities including a maximum number of supported L3-CLI measurement resources. The UE receives (130), from the base station, a CLI reporting configuration. The UE performs (140) L1-CLI measurements associated with the L1-CLI measurement resources, the L1-CLI measurements based on the CLI reporting configuration. The UE performs (150) L3-CLI measurements associated with the L3-CLI measurement resources, the L3-CLI measurements based on the CLI reporting configuration. The UE generates (160, 170) an L1-CLI report and an L3-CLI report based on the CLI reporting configuration. The UE reports (180, 190), to the base station, the L1-CLI report and the L3-CLI report.

## Description

### TECHNICAL FIELD

The disclosure generally relates to wireless systems. More particularly, the subject matter disclosed herein relates to improvements to counting resources for layer 1 (L1)- cross link interference (CLI) reporting in wireless systems.

### SUMMARY

In wireless systems, CLI may negatively affect system performance. An aggressor user equipment (UE) that transmits a sounding reference signal (SRS) may be measured by a victim UE to report SRS-reference signal received power (RSRP) to a base station or a next generation NodeB (gNB) of a wireless system. A victim UE may measure received signal strength indicator (RSSI), which may include background noise and interference from an aggressor UE. The victim UE may report the RSSI to the gNB. A victim UE may employ layer 3 (L3) filtering prior to final reporting. However, use of L3 filtering may cause latency and inaccurate reporting.

To solve this type of problem, use of L1 signaling may be employed to lower latency and/or provide more accurate reporting. In wireless systems configured for sub-band full duplex (SBFD) operation, CLI-RSSI and/or CLI-SRS-RSRP may be reported using L1 signaling.

One issue with the above approach is management of resources. It is important to ensure that the maximum number of configured resources does not exceed a UE's capabilities regardless whether a resource is used to generate an L1 report or an L3 report.

To overcome these types of issues, methods and devices are described herein for counting resources for L1 and/or L3 reporting of CLI-RSSI and/or CLI-SRS-RSRP.

Methods and devices are also described herein for counting and/or scaling resources wherein both L1 and L3 reporting are supported.

Methods and devices are further described herein for counting and/or scaling resources that may span a number of non-contiguous resource blocks (RBs).

The above approaches improve on previous methods because various UEs with various capabilities are supported. Furthermore, capabilities for various UEs are managed to avoid exceeding the UE capabilities. Disclosed embodiments may provide greater efficiency in wireless networks over conventional approaches, and may provide more reliable UEs when communicating with wireless networks over UEs employing other approaches.

In an embodiment, a method is performed by a UE. The method comprises communicating, to a base station configured for SBFD, one or more L1-CLI reporting capabilities, the one or more L1-CLI reporting capabilities including a maximum number of supported L1-CLI measurement resources, and communicating, to the base station, one or more L3-CLI reporting capabilities, the one or more L3-CLI reporting capabilities including a maximum number of supported L3-CLI measurement resources. The method comprises receiving, from the base station, a CLI reporting configuration. The method comprises performing L1-CLI measurements associated with the L1-CLI measurement resources, the L1-CLI measurements based on the CLI reporting configuration. The method comprises performing L3-CLI measurements associated with the L3-CLI measurement resources, the L3-CLI measurements based on the CLI reporting configuration. The method comprises generating an L1-CLI report including the L1-CLI measurements, the L1-CLI report based on the CLI reporting configuration. The method comprises generating an L3-CLI report including the L3-CLI measurements, the L3-CLI report based on the CLI reporting configuration. The method comprises reporting, to the base station, the L1-CLI report and the L3-CLI report.

In an embodiment, a UE comprises at least one processor and memory that stores instructions, which when executed by the at least one processor, control the UE to communicate, to a base station configured for SBFD, one or more L1-CLI reporting capabilities, the one or more L1-CLI reporting capabilities including a maximum number of supported L1-CLI measurement resources. The instructions also control the UE to communicate, to the base station, one or more L3-CLI reporting capabilities, the one or more L3-CLI reporting capabilities including a maximum number of supported L3-CLI measurement resources. The instructions also control the UE to receive, from the base station, a CLI reporting configuration. The instructions also control the UE to perform L1-CLI measurements associated with the L1-CLI measurement resources, the L1-CLI measurements based on the CLI reporting configuration. The instructions also control the UE to perform L3-CLI measurements associated with the L3-CLI measurement resources, the L3-CLI measurements based on the CLI reporting configuration. The instructions also control the UE to generate an L1-CLI report including the L1-CLI measurements, the L1-CLI report based on the CLI reporting configuration. The instructions also control the UE to generate an L3-CLI report including the L3-CLI measurements, the L3-CLI report based on the CLI reporting configuration. The instructions also control the UE to report, to the base station, the L1-CLI report and the L3-CLI report.

In an embodiment, a method is performed by a UE. The method comprises communicating, to a base station configured for SBFD, one or more CLI reporting capabilities, the one or more CLI reporting capabilities including a maximum number of supported CLI measurement resources, the maximum number of supported CLI measurement resources including L1-CLI measurement resources and L3-CLI measurement resources. The method comprises receiving, from the base station, a CLI reporting configuration. The method comprises performing L1-CLI measurements associated with the L1-CLI measurement resources, the L1-CLI measurements based on the CLI reporting configuration. The method comprises performing L3-CLI measurements associated with the L3-CLI measurement resources, the L3-CLI measurements based on the CLI reporting configuration. The method comprises generating, an L1-CLI report including the L1-CLI measurements, the L1-CLI report based on the CLI reporting configuration. The method comprises generating an L3-CLI report including the L3-CLI measurements, the L3-CLI report based on the CLI reporting configuration. The method comprises reporting, to the base station, the L1-CLI report and the L3-CLI report.

In an embodiment, a UE comprises at least one processor and memory that stores instructions, which when executed by the at least one processor, control the UE to communicate, to a base station configured for SBFD, one or more CLI reporting capabilities, the one or more CLI reporting capabilities including a maximum number of supported CLI measurement resources, the maximum number of supported CLI measurement resources including L1-CLI measurement resources and L3-CLI measurement resources. The instructions also control the UE to receive, from the base station, a CLI reporting configuration. The instructions also control the UE to perform L1-CLI measurements associated with the L1-CLI measurement resources, the L1-CLI measurements based on the CLI reporting configuration. The instructions also control the UE to perform L3-CLI measurements associated with the L3-CLI measurement resources, the L3-CLI measurements based on the CLI reporting configuration. The instructions also control the UE to generate an L1-CLI report including the L1-CLI measurements, the L1-CLI report based on the CLI reporting configuration. The instructions also control the UE to generate an L3-CLI report including the L3-CLI measurements, the L3-CLI report based on the CLI reporting configuration. The instructions also control the UE to report, to the base station, the L1-CLI report and the L3-CLI report.

In an embodiment, a method is performed by a UE. The method comprises communicating, to a base station configured for SBFD, one or more L1-CLI reporting capabilities, the one or more L1-CLI reporting capabilities including a maximum number of supported L1-CLI measurement resources. The method comprises receiving, from the base station, a CLI reporting configuration. The method comprises performing L1-CLI measurements associated with the L1-CLI measurement resources, the L1-CLI measurements based on the CLI reporting configuration. The L1-CLI measurement resources include one or more L1-CLI-received signal strength indicator (RSSI) measurement resources that span a number of non-contiguous resource blocks (RBs). The one or more L1-CLI-RSSI measurement resources are counted, based on a non-contiguous scaling factor, toward the maximum number of supported L1-CLI measurement resources. The method comprises generating an L1-CLI report including the L1-CLI measurements, the L1-CLI report based on the CLI reporting configuration. The method comprises reporting, to the base station, the L1-CLI report.

### BRIEF DESCRIPTION OF THE DRAWING

In the following section, the aspects of the subject matter disclosed herein will be described with reference to exemplary embodiments illustrated in the figures, in which:
FIG. 1 is a flowchart illustrating a method for counting separate CLI resources for L1-CLI reporting and L3-CLI reporting, according to an embodiment;
FIG. 2 is diagram illustrating a UE on which various embodiments may be practiced;
FIG. 3 is a flowchart illustrating a method for counting a maximum number of supported CLI measurement resources including L1-CLI measurement resources and L3-CLI measurement resources, according to an embodiment;
FIG. 4 is diagram illustrating uplink subbands and downlink subbands of a channel band over which disclosed devices may communicate, according to an embodiment;
FIG. 5 is a block diagram of an electronic device in a network environment, according to an embodiment; and
FIG. 6 shows a system including a UE and a gNB in communication with each other, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (for example, "non-contiguous," "pre-determined," "layer-1," etc.) may be occasionally interchangeably used with a corresponding non-hyphenated version (for example, "noncontiguous," "predetermined," "layer 1," etc.), and a capitalized entry (for example, "User Equipment," "Uplink," "Downlink," etc.) may be interchangeably used with a corresponding non-capitalized version (for example, "user equipment," "uplink," "downlink," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (for example, spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

According to 3rd Generation Partnership Project (3GPP) Release 16 (R16) for new radio (NR), two measurements have been introduced to assess user equipment UE-to-UE CLI. Specifically, L3-CLI-RSSI reporting and L3-CLI-SRS-RSRP. For L3-CLI-RSSI, a UE measures total received power including noise and interference over a configured CLI-RSSI resource which includes a set of contiguous RBs spanning contiguous symbols. For L3-CLI-SRS-RSRP, a UE measures RSRP of an SRS transmitted by an aggressor UE.

Both measurements are L3 measurements which means that an L3 filter is applied and the report is carried in radio resource control (RRC) signaling.

To enable such features, a UE can indicate to a gNB, via capability signaling, one of the following capabilities: *cli-RSSI-Meas-r16* or *cli-SRS-RSRP-Meas-r16. cli-RSSI-Meas-r16* acts as a key indicating that a UE supports L3 CLI-RSSI. *cli-SRS-RSRP-Meas-r16* acts as a key indicating that a UE supports L3 CLI-SRS-RSRP.

If a UE indicates any of the above capabilities, the maximum number of configured resources that can be supported is indicated as shown in Table 1 below.

**Table 1 Conventional features related to L3-CLI-RSSI and L3-CLI-SRS-RSRP**

| Feature | Related mandatory capabilities |
|---|---|
| L3-CLI-RSSI reporting which can be enabled via *cli-RSSI-Meas-r16* | *maxNumberCLI-RSSI-r16* indicating the maximum number of measurement resources configured for CLI-RSSI measurement |
| L3 CLI-SRS-RSRP reporting which can be enabled via *cli-SRS-RSRP-Meas-r16* | *• maxNumberCLI-SRS-RSRP-r16* indicating maximum number of measurement resources across all CCs configured for SRS-RSRP measurement |
| | *• maxNumberPerSlotCLI-SRS-RSRP-r16* indicating maximum number of measurement resources across all CCs configured for SRS-RSRP measurement within a slot |

In a RANI meeting, it was agreed that a CLI RSSI can occupy a contiguous chunk of RBs in only one of the downlink (DL) subbands. Additionally, it was agreed that a single CLI RSSI can include two chunks of RBs, where each chunk of RBs is contiguous and confined in the upper DL subband and the lower DL subband.

For frequency resource allocation of a CLI-RSSI measurement resource, the following are supported: Measurement resource type#1, or Measurement resource type#2. For Measurement resource type#1: one CLI-RS SI measurement resource is configured within a DL subband. For Measurement resource type#2: one CLI-RSSI measurement resource is configured across two DL subbands.

In R16 CLI measurement based on RSSI, a UE can indicate to a gNB the maximum number of measurement resources configured for CLI-RSSI measurement that is used to calculate L3 CLI-RSSI. With support of L1 CLI-RSSI, the maximum number of configured RSSI resources should not exceed the capabilities of the UE regardless whether a RSSI resource is used to generate an L1-CLI-RSSI report or an L3-CLI-RSSI report. Also, SRS-RSRP may experience a similar issue where a UE may support both L3-CLI-SRS-RSRP reporting and L1-CLI-SRS-RSRP.

Additionally, for L1 CLI-RSSI resources, it was agreed that such resources may consist of two chunks of RBs where each chunk comprises contiguous RBs and confined within one of the two DL subbands.

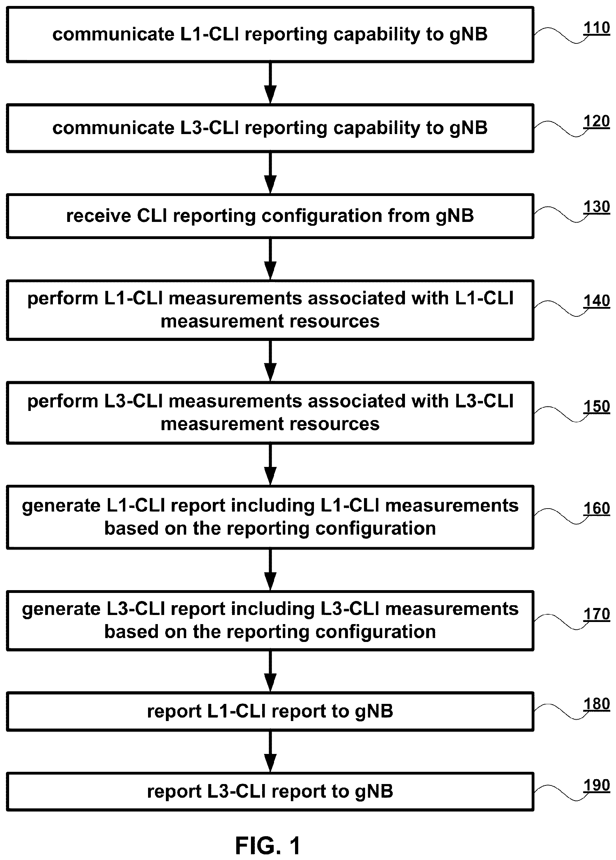

FIG. 1 is a flowchart illustrating a method for counting separate CLI resources for L1-CLI reporting and L3-CLI reporting, according to an embodiment.

Referring to FIG. 1, at 110, a UE may communicate an L1-CLI reporting capability to a gNB. The L1-CLI reporting capability may include a maximum number of supported L1-CLI measurement resources. At 120, the UE may communicate an L3-CLI reporting capability to the gNB. The L3-CLI reporting capability may include a maximum number of supported L3-CLI measurement resources At 130, the UE may receive a CLI reporting configuration from the gNB. At 140, the UE may perform L1-CLI measurements. The L1-CLI measurements may be associated with L1-CLI measurement resources. The L1-CLI measurements may be based on the reporting configuration. At 150, the UE may perform L3-CLI measurements. The L3-CLI measurements may be associated with L3-CLI measurement resources. The L3-CLI measurements may be based on the reporting configuration. At 160, the UE may generate an L1-CLI report. The L1-CLI report may include the L1-CLI measurements. The L1-CLI report may be based on the reporting configuration. At 170, the UE may generate an L3-CLI report. The L3-CLI report may include the L3-CLI measurements. The L3-CLI report may be based on the reporting configuration. At 180, the UE may communicate the L1-CLI report to the gNB. At 190, the UE may communicate the L3-CLI report to the gNB.

In an embodiment, L1-CLI measurement resources may comprise one or more L1-CLI-RSSI measurement resources. The one or more L1-CLI-RSSI measurement resources may span a number of non-contiguous resource blocks (RBs). The one or more L1-CLI-RSSI measurement resources may be counted, based on a non-contiguous scaling factor, toward a maximum number of supported L1-CLI measurement resources.

In accordance with an embodiment, new capability parameters may be introduced for L1-CLI-RSSI and L1-SRS-RSRP, separate from legacy parameters used for L3-CLI-RSSI and L3-SRS-RSRP: *maxNumberCLI-RSSI-r16, maxNumberCLI-SRS-RSRP-r16,* and *maxNumberCLI-SRS-RSRP-r16.*

For example, a new UE capability may indicate the maximum number of measurement resources configured for CLI-RSSI measurement for L1-CLI-RSSI such as *maxNumberCLI-RSSI-r19.* Moreover, an additional parameter may indicate the maximum number of measurement resources configured for CLI-RSSI measurement within a slot for L1-CLI-RSSI such as, for example, *maxNumberPerSlotCLI-RSSI-r19.*

New UE capabilities may indicate the maximum number of measurement resources across all CCs configured for SRS-RSRP measurement for L1-SRS-RSRP such as *maxNumberCLI-SRS-RSRP-r19,* and another one may indicate the maximum number of measurement resources across all CCs configured for SRS-RSRP measurement within a slot for L1-SRS-RSRP such as *maxNumberPerSlotCLI-SRS-RSRP-r19.*

From a physical layer perspective, a CLI-RSSI resource and an SRS-RSRP resource may be the same, regardless if they are used to compute an L1 report or an L3 report. Therefore, introducing a capability indicating the maximum number of resources across the resources used to compute an L1 report and an L3 report may be beneficial. For example, considering a UE supporting maximum 16 CLI-RSSI resources for L3-CLI-RSSI calculations, if this UE does not want to increase its complexity when supporting an L1 report on the top of an L3 report, the UE may pessimistically report the maximum of 8 CLI-RSSI resources for L3 report and 8 CLI-RSSI resources for L1 report, which may impose unnecessary restriction on the gNB. Instead, the UE may report, for example, *TOTALmaxNumberCLI-RSSI-L1L3* indicating the maximum total number of measurement resource CLI-RSSI configured for either L1 report or L3 report. In this example, the UE can indicate a maximum of 16 CLI-RSSI for the L1 report, 16 CLI-RSSI for the L3 report, and a total across them as 16. In this case, the gNB has the freedom to configure CLI-RSSI as long as the UE's capabilities are not violated.

In an embodiment, a method for counting separate CLI resources for L1-CLI reporting and L3-CLI reporting may comprise communicating a combined CLI capability. The combined CLI capability may indicate a maximum number of supported resources across one or more L1-CLI reporting capabilities and one or more L3-CLI reporting capabilities.

In an embodiment, one or more L1-CLI reporting capabilities may comprise a maximum number of supported L1-CLI-RSSI resources or a maximum number of supported L1-CLI-SRS-RSRP resources.

A new capability, for example, *TOTALmaxNumberPerSlotCLI-RSSI-L1L3,* may indicate the maximum total number of measurement resources per slot for CLI-RSSI configured for either an L1 report or an L3 report. A new capability, for example, *TOTALmaxNumberCLI-SRS-RSRP-L1L3,* may indicate the maximum total number of measurement resources for SRS-RSRP configured for either an L1 report or an L3 report. A new capability, for example, *TOTALmaxNumberPerSlotCLI-SRS-RSRP-L1L3,* may indicate the maximum total number of measurement resources per slot for SRS-RSRP configured for either an L1 report or an L3 report.

For example, these capabilities may indicate a corresponding limit per component carrier (CC) or across all CCs.

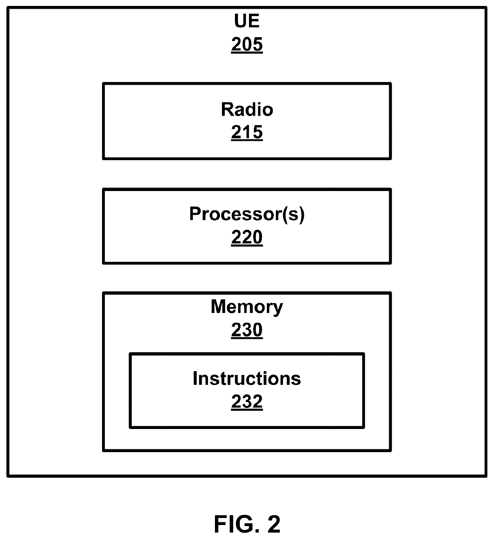

FIG. 2 is diagram illustrating a UE 205 on which various embodiments may be practiced.

Referring to FIG. 2, the UE 205 includes a radio 215. The radio 215 may be employed to communicate with one or more radio access nodes (RANs). The UE 205 includes at least one processor 220. The UE 205 also includes at least one memory 230. The at least one memory 230 includes instructions 232. When executed by the at least one processor 220, the instructions 232 may control the UE to perform various aspects of various disclosed embodiments.

In an embodiments a UE may comprise a combined CLI capability. The combined CLI capability may indicate a maximum number of supported resources across L1-CLI reporting capabilities and L3-CLI reporting capabilities.

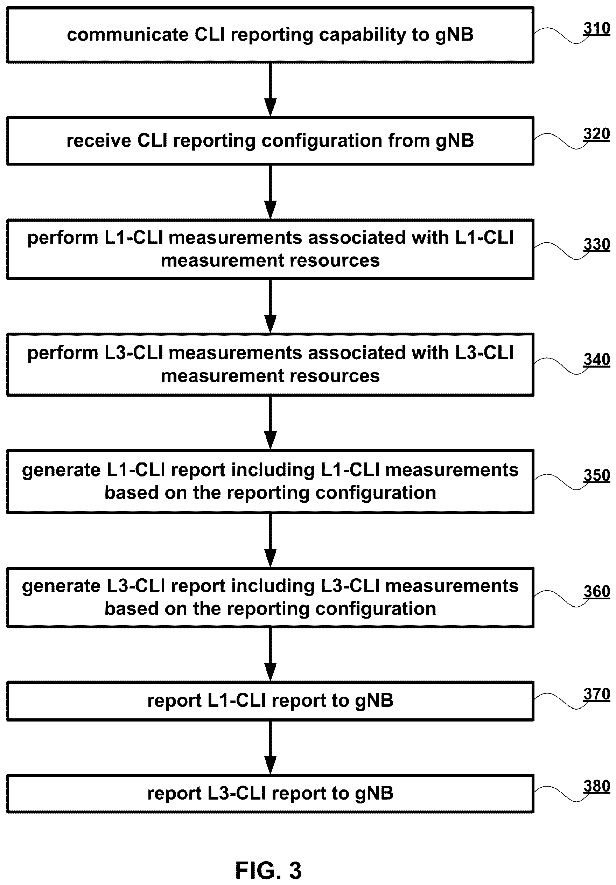

FIG. 3 is a flowchart illustrating a method for counting a maximum number of supported CLI measurement resources including L1-CLI measurement resources and L3-CLI measurement resources, according to an embodiment.

Referring to FIG. 3, at 310, a UE may communicate a CLI reporting capability to a gNB. The CLI reporting capability may include a maximum number of supported CLI measurement resources. The maximum number of supported CLI measurement resources may include L1-CLI measurement resources and L3-CLI measurement resources. At 320, the UE may receive a CLI reporting configuration from the gNB. At 330, the UE may perform L1-CLI measurements. The L1-CLI measurements may be associated with L1-CLI measurement resources. The L1-CLI measurements may be based on the reporting configuration. At 340, the UE may perform L3-CLI measurements. The L3-CLI measurements may be associated with L3-CLI measurement resources. The L3-CLI measurements may be based on the reporting configuration. At 350, the UE may generate an L1-CLI report. The L1-CLI report may include the L1-CLI measurements. The L1-CLI report may be based on the reporting configuration. At 360, the UE may generate an L3-CLI report. The L3-CLI report may include the L3-CLI measurements. The L3-CLI report may be based on the reporting configuration. At 370, the UE may communicate the L1-CLI report to the gNB. At 380, the UE may communicate the L3-CLI report to the gNB.

In an embodiment, L1-CLI measurement resources may comprise one or more L1-CLI-RSSI measurement resources. The one or more L1-CLI-RSSI measurement resources may span a number of non-contiguous resource blocks (RBs). The one or more L1-CLI-RSSI measurement resources may be counted, based on a non-contiguous scaling factor, toward a maximum number of supported CLI measurement resources.

In an embodiment, a maximum number of supported CLI measurement resources may be based on a maximum number of L1-CLI measurement resources. L3-CLI measurement resources may comprise one or more L3-SRS-RSRP measurement resources or one or more L3-CLI-RSSI measurement resources. The L3-CLI measurement resources may be counted, based on a scaling factor, toward the maximum number of supported CLI measurement resources.

In an embodiment, a maximum number of supported CLI measurement resources may be based on a maximum number of L3-CLI measurement resources. L1-CLI measurement resources may comprise one or more L1-SRS-RSRP measurement resources or one or more L1-CLI-RSSI measurement resources. The L1-CLI measurement resources may be counted, based on a complexity scaling factor, toward the maximum number of supported CLI measurement resources.

Adding CLI-RSSI and SRS-RSRP resources for L1 CLI reporting may introduce additional complexity. In an embodiment, a single capability may be reported. The single capability may comprise either a new capability or an existing capability.

If R16 capabilities are used, then resources CLI-RSSI and SRS-RSRP configured to compute L1 reports may be counted towards R16 limits. For example, considering *maxNumberCLI-RSSI-r16,* configured L1-CLI-RSSI resources for L1 reporting may be counted towards this limit in addition to L3-CLI-RSSI resources for L3 reporting. The same approach may be applied for *maxNumberCLI-SRS-RSRP-r16* and *maxNumberPerSlotCLI-SRS-RSRP-r16.*

If other capabilities for CLI resources configured for L1 reporting are configured, such as *maxNumberCLI-RSSI-r19,* the resources configured for an L3 report, L3-CLI-RSSI and L3-SRS-RSRP, may be counted towards the new capability limit.

For example, if a UE indicates a new capability limit on the number of resources to generate an L1 CLI report, for example, *maxNumberCLI-RSSI-r19,* then all configured CLI-RSSI resources for generating an L3 report or an L1 report are counted toward this new limit.

In R16, if a UE supports L3-CLI-RSSI measurements (by indicating *cli-RSSI-Meas-r16),* the UE should indicate *maxNumberCLI-RSSI-r16.* Similarly, in R16, if a UE supports L3-CLI-SRS-RSRP measurements (by indicating *cli-SRS-RSRP-Meas-r16*), the UE should indicate *maxNumberCLI-SRS-RSRP-r16* and *maxNumberPerSlotCLI-SRS-RSRP-r16.* Such restriction may not be needed and may be relaxed. For example, such relaxation may occur if a UE can determine whether the network supports L1-CLI measurements and L3-CLI measurements. A UE can make such determination when it detects configurations related to SBFD operation.

For example, if a UE indicates a new capability limit on the maximum number of resources to generate an L1 CLI report, for example, *maxNumberCLI-RSSI-r19,* then the UE does not need to indicate *maxNumberCLI-SRS-RSRP-r16.* All CLI-RSSI resources either configured for an L1 report or an L3 report may be counted toward *maxNumberCLI-RSSI-r19.* Therefore, if a UE indicates it supports L3 CLI-RSSI measurements or L3 SRS-RSRP measurements via *cli-RSSI-Meas-r16* or *cli-SRS-RSRP-Meas-r16,* respectively, the UE may indicate R16 capability parameters on the maximum number of resources, or indicate new capability parameters of the maximum number of resources configured for L1 reports and L3 reports.

If a UE fails to determine whether a gNB supports both L1-CLI reporting and L3-CLI reporting, the UE may need to indicate, via capability signaling, the maximum number of supported resources for L1-CLI reporting and L3-CLI reporting, as described earlier.

A single CLI-RSSI for an L1 report can be non-contiguous across two DL subbands. Specifically, a single CLI-RSSI may include RBs in a lower DL subband and in an upper DL subband, where the RBs in each DL subband are contiguous. In other words, a single CLI-RSSI may include two chunks of RBs, where each chunk is contiguous.

Regardless of which capability framework is used, it may be important to determine how such a CLI-RSSI resource including two chunks is counted towards the maximum limit compared to regular CLI-RSSI resources consisting of a single chunk of RBs.

As one option, CLI-RSSI including two chunks may be counted as multiple CLI-RSSI including a single chunk. Specifically, it may be counted β times, where the value of β may indicated to the gNB, for example, via UE capability signaling, or predefined in the specification for example. β may be referred to as a non-contiguous scaling factor

Another option is that β=2. In this case, each CLI-RSSI resources comprising two chunks of RBs is counted as 2 legacy CLI-RSSI resources consisting of a single chunk of RBs.

As yet another option, a UE may support both L3-CLI-RSSI reporting and L1-CLI-RSSI reporting. The UE may indicate to the gNB via capability signaling a maximum number of configured CLI-RSSI resources that can be used for L3-CLI-RSSI and L1-CLI-RSSI, for example, *maxNumberCLI-RSSI-r19.* Table 2 shows an example of how the counting may be conducted.

**Table 2 Counting CLI-RSSI for L1-CLI-RSSI reporting and L3-CLI-RSSI reporting, where L1-CLI-RSSI resources with two non-contiguous chunks are counted β times**

| Configured CLI-RSSI resources | Counting toward the limit *maxNumberCLI-RSSI-**r19*** |
|---|---|
| CLI-RSSI for L3 reporting #0 | 1 |
| CLI-RSSI for L1 reporting consists of a single chunk of contiguous RBs #1 | 1 |
| CLI-RSSI for L1 reporting consists of two chunks of RBs where each chunk is contiguous and confined in upper or lower DL subbands #2 | *β*, for example, *β* = 2 |
| CLI-RSSI for L1 reporting consists of a single chunk of contiguous RBs #3 | 1 |
| Total number of configured resources = 4 | These resources are counted towards the limit as 5 (Not 4) |

Though this example shows counting towards a new capability, a similar approach may be applied when counting towards a legacy capability limit, for example, *maxNumberCLI-RSSI-r16.* Additionally, this example is for CLI-RSSI resources, but it can be applied to CLI-SRS-RSRP resources as well.

When CLI-RSSI or SRS-RSRP for L3 reports are counted towards a new capability limit that may be introduced for L1 CLI reporting, it may be counted λ times. For example, for some UEs, handling CLI-RSSI resources or SRS-RSRP resources for L3 reports may be less complex than handling CLI-RSSI resources or SRS-RSRP resources for L1 reports. In this case, λ may take any value such as, for example, 0.5. λ may be referred to as a scaling factor.

For example, a UE supports both L3-CLI-RSSI reporting and L1-CLI-RSSI reporting. The UE indicates to the gNB via capability signaling a maximum number of configured CLI-RSSI resources that can be used for L3-CLI-RSSI and L1-CLI-RSSI, for example, *maxNumberCLI-RSSI-r19.* Table 3 shows an example of how the counting may be conducted. Compared with the previous example, the CLI-RSSI resources used for L3 reporting are counted λ times, instead of 1.

**Table 3 Counting CLI-RSSI for L1-CLI-RSSI reporting and L3-CLI-RSSI reporting, where L1-CLI-RSSI resources with two non-contiguous chunks are counted β times, and L3-CLI-RSSI resources are counted λ times**

| Configured CLI-RSSI resources | Counting toward the limit *maxNumberCLI-RSSI-**r19*** |
|---|---|
| CLI-RSSI for L3 reporting #0 | *λ*, for example, *λ* = 0.5 |
| CLI-RSSI for L1 reporting consists of a single chunk of contiguous RBs #1 | 1 |
| CLI-RSSI for L1 reporting consists of two chunks of RBs where each chunk is contiguous and confined in upper or lower DL subbands #2 | *β*, for example, *β* = 2 |
| CLI-RSSI for L1 reporting consists of a single chunk of contiguous RBs #3 | 1 |
| Total number of configured resources = 4 | These resources are counted towards the limit as 5 (Not 4) |

Though this example shows the counting towards a new capability, a similar approach may be applied when counting towards a legacy capability limit, for example, *maxNumberCLI-RSSI-r16.* Additionally, this example is for CLI-RSSI resources, but it can be applied to CLI-SRS-RSRP resources as well.

Similarly, if the resources for L1 CLI reporting are counted towards a legacy limit on the number of resources used for L3 reporting, they can be counted γ times as shown in Table 4. γ may be referred to as a complexity scaling factor.

**Table 4 - When a CLI resource for an L1-CLI report is counted towards a legacy limit, this CLI resource is counted as γ times of the resource used for L3-CLI reporting**

| Configured CLI-RSSI resources | Counting toward the limit *maxNumberCLI-RSSI-**r16*** |
|---|---|
| CLI-RSSI for L3 reporting #0 | 1 |
| CLI-RSSI for L1 reporting consists of a single chunk of contiguous RBs #1 | *γ*, for example, *γ* = 1 |
| CLI-RSSI for L1 reporting consists of two chunks of RBs where each chunk is contiguous and confined in upper or lower DL subbands #2 | *β*, for example, *β* = 2 |
| CLI-RSSI for L1 reporting consists of a single chunk of contiguous RBs #3 | *γ*, for example, *γ* = 1 |
| Total number of configured resources = 4 | These resources are counted towards the limit as 5 (Not 4) |

In the above-described approaches, the value of λ, β, or γ may be indicated to the gNB via capability signaling or predefined, for example, provided in specifications. They may take values greater than 1 or smaller than 1.

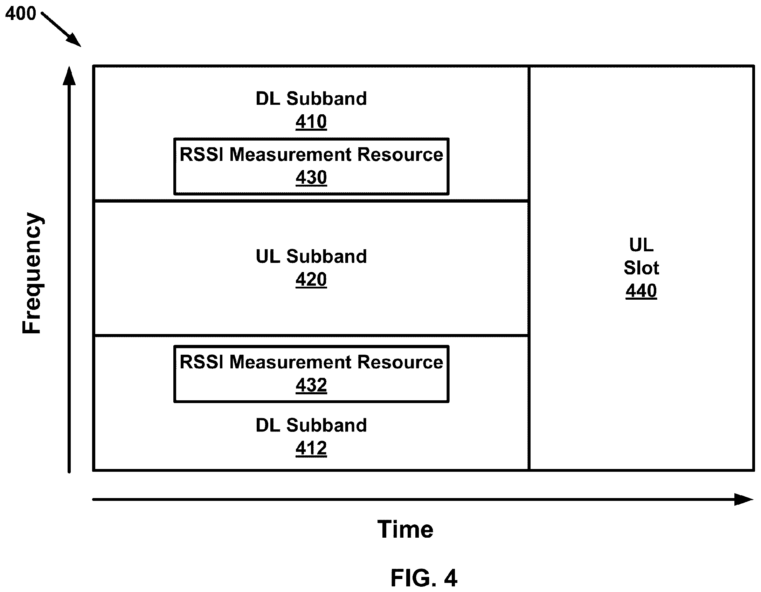

FIG. 4 is diagram illustrating uplink (UL) subbands and DL subbands of channel band 400 over which disclosed devices may communicate, according to an embodiment.

Referring to FIG. 4, the channel band 400 may be configured with a first DL subband 410 and a second DL subband 412. The channel band 400 may be configured with a UL subband 420 and a UL slot 440. L1-RSSI may be measured across two DL subbands (for example, 410 and 412). The two DL subbands may be non-contiguous (as illustrated). RSSI measurement resource 430 illustrates L1-RSSI measurement in DL subband 410. RSSI measurement resource 432 illustrates L1-RSSI measurement in DL subband 412.

In an embodiment, L1-CLI measurement resources may comprise one or more L1-CLI-SRS-RSRP measurement resources. The one or more L1-CLI-SRS-RSRP measurement resources may be measured in an up-link (UL) subband.

In an embodiment, L1-CLI measurement resources may comprise one or more L1-CLI-RSSI measurement resources. The one or more L1-CLI-RSSI measurement resources may be measured in a down-link (DL) subband, a UL subband, or across two DL subbands.

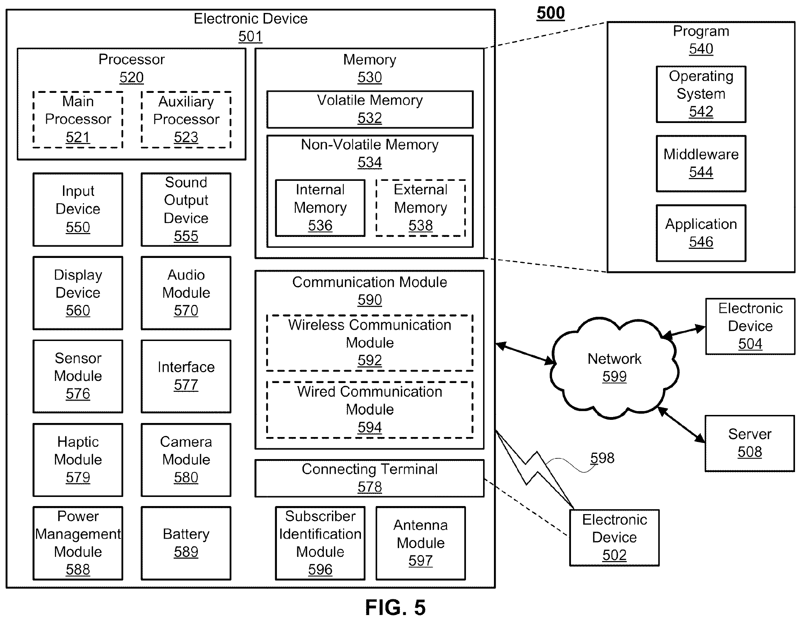

FIG. 5 is a block diagram of an electronic device in a network environment 500, according to an embodiment. For example, an electronic device may comprise a UE.

Referring to FIG. 5, an electronic device 501 in a network environment 500 may communicate with an electronic device 502 via a first network 598 (for example, a short-range wireless communication network), or an electronic device 504 or a server 508 via a second network 599 (for example, a long-range wireless communication network). The electronic device 501 is an example of a user equipment described above. It may communicate with the electronic device 504 via the server 508. The electronic device 501 may include a processor 520, a memory 530, an input device 550, a sound output device 555, a display device 560, an audio module 570, a sensor module 576, an interface 577, a haptic module 579, a camera module 580, a power management module 588, a battery 589, a communication module 590, a subscriber identification module (SIM) card 596, or an antenna module 597. In one embodiment, at least one (for example, the display device 560 or the camera module 580) of the components may be omitted from the electronic device 501, or one or more other components may be added to the electronic device 501. Some of the components may be implemented as a single integrated circuit (IC). For example, the sensor module 576 (for example, a fingerprint sensor, an iris sensor, or an illuminance sensor) may be embedded in the display device 560 (for example, a display).

The processor 520 may execute software (for example, a program 540) to control at least one other component (for example, a hardware or a software component) of the electronic device 501 coupled with the processor 520 and may perform various data processing or computations.

As at least part of the data processing or computations, the processor 520 may load a command or data received from another component (for example, the sensor module 576 or the communication module 590) in volatile memory 532, process the command or the data stored in the volatile memory 532, and store resulting data in non-volatile memory 534. The processor 520 may include a main processor 521 (for example, a central processing unit (CPU) or an application processor (AP)), and an auxiliary processor 523 (for example, a graphics processing unit (GPU), an image signal processor (ISP), a sensor hub processor, or a communication processor (CP)) that is operable independently from, or in conjunction with, the main processor 521. Additionally or alternatively, the auxiliary processor 523 may be adapted to consume less power than the main processor 521, or execute a particular function. The auxiliary processor 523 may be implemented as being separate from, or a part of, the main processor 521.

The auxiliary processor 523 may control at least some of the functions or states related to at least one component (for example, the display device 560, the sensor module 576, or the communication module 590) among the components of the electronic device 501, instead of the main processor 521 while the main processor 521 is in an inactive (for example, sleep) state, or together with the main processor 521 while the main processor 521 is in an active state (for example, executing an application). The auxiliary processor 523 (for example, an image signal processor or a communication processor) may be implemented as part of another component (for example, the camera module 580 or the communication module 590) functionally related to the auxiliary processor 523.

The memory 530 may store various data used by at least one component (for example, the processor 520 or the sensor module 576) of the electronic device 501. The various data may include, for example, software (for example, the program 540) and input data or output data for a command related thereto. The memory 530 may include the volatile memory 532 or the non-volatile memory 534. Non-volatile memory 534 may include internal memory 536 and/or external memory 538.

The program 540 may be stored in the memory 530 as software, and may include, for example, an operating system (OS) 542, middleware 544, or an application 546.

The input device 550 may receive a command or data to be used by another component (for example, the processor 520) of the electronic device 501, from the outside (for example, a user) of the electronic device 501. The input device 550 may include, for example, a microphone, a mouse, or a keyboard.

The sound output device 555 may output sound signals to the outside of the electronic device 501. The sound output device 555 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 560 may visually provide information to the outside (for example, a user) of the electronic device 501. The display device 560 may include, for example, a display, a hologram device, or a projector and control circuitry to control a corresponding one of the display, hologram device, and projector. The display device 560 may include touch circuitry adapted to detect a touch, or sensor circuitry (for example, a pressure sensor) adapted to measure the intensity of force incurred by the touch.

The audio module 570 may convert a sound into an electrical signal and vice versa. The audio module 570 may obtain the sound via the input device 550 or output the sound via the sound output device 555 or a headphone of an external electronic device 502 directly (for example, wired) or wirelessly coupled with the electronic device 501.

The sensor module 576 may detect an operational state (for example, power or temperature) of the electronic device 501 or an environmental state (for example, a state of a user) external to the electronic device 501, and then generate an electrical signal or data value corresponding to the detected state. The sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 577 may support one or more specified protocols to be used for the electronic device 501 to be coupled with the external electronic device 502 directly (for example, wired) or wirelessly. The interface 577 may include, for example, a high- definition multimedia interface (HDMI), a universal serial bus (USB) interface, a secure digital (SD) card interface, or an audio interface.

A connecting terminal 578 may include a connector via which the electronic device 501 may be physically connected with the external electronic device 502. The connecting terminal 578 may include, for example, an HDMI connector, a USB connector, an SD card connector, or an audio connector (for example, a headphone connector).

The haptic module 579 may convert an electrical signal into a mechanical stimulus (for example, a vibration or a movement) or an electrical stimulus which may be recognized by a user via tactile sensation or kinesthetic sensation. The haptic module 579 may include, for example, a motor, a piezoelectric element, or an electrical stimulator.

The camera module 580 may capture a still image or moving images. The camera module 580 may include one or more lenses, image sensors, image signal processors, or flashes. The power management module 588 may manage power supplied to the electronic device 501. The power management module 588 may be implemented as at least part of, for example, a power management integrated circuit (PMIC).

The battery 589 may supply power to at least one component of the electronic device 501. The battery 589 may include, for example, a primary cell which is not rechargeable, a secondary cell which is rechargeable, or a fuel cell.

The communication module 590 may support establishing a direct (for example, wired) communication channel or a wireless communication channel between the electronic device 501 and the external electronic device (for example, the electronic device 502, the electronic device 504, or the server 508) and performing communication via the established communication channel. The communication module 590 may include one or more communication processors that are operable independently from the processor 520 (for example, the AP) and supports a direct (for example, wired) communication or a wireless communication. The communication module 590 may include a wireless communication module 592 (for example, a cellular communication module, a short-range wireless communication module, or a global navigation satellite system (GNSS) communication module) or a wired communication module 594 (for example, a local area network (LAN) communication module or a power line communication (PLC) module). A corresponding one of these communication modules may communicate with the external electronic device via the first network 598 (for example, a short-range communication network, such as BLUETOOTH^{™}, wireless-fidelity (Wi-Fi) direct, or a standard of the Infrared Data Association (IrDA)) or the second network 599 (for example, a long-range communication network, such as a cellular network, the Internet, or a computer network (for example, LAN or wide area network (WAN)). These various types of communication modules may be implemented as a single component (for example, a single IC), or may be implemented as multiple components (for example, multiple ICs) that are separate from each other. The wireless communication module 592 may identify and authenticate the electronic device 501 in a communication network, such as the first network 598 or the second network 599, using subscriber information (for example, international mobile subscriber identity (IMSI)) stored in the subscriber identification module 596.

The antenna module 597 may transmit or receive a signal or power to or from the outside (for example, the external electronic device) of the electronic device 501. The antenna module 597 may include one or more antennas, and, therefrom, at least one antenna appropriate for a communication scheme used in the communication network, such as the first network 598 or the second network 599, may be selected, for example, by the communication module 590 (for example, the wireless communication module 592). The signal or the power may then be transmitted or received between the communication module 590 and the external electronic device via the selected at least one antenna.

Commands or data may be transmitted or received between the electronic device 501 and the external electronic device 504 via the server 508 coupled with the second network 599. Each of the electronic devices 502 and 504 may be a device of a same type as, or a different type, from the electronic device 501. All or some of operations to be executed at the electronic device 501 may be executed at one or more of the external electronic devices 502, 504, or 508. For example, if the electronic device 501 should perform a function or a service automatically, or in response to a request from a user or another device, the electronic device 501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 501. The electronic device 501 may provide the outcome, with or without further processing of the outcome, as at least part of a reply to the request. To that end, a cloud computing, distributed computing, or client-server computing technology may be used, for example.

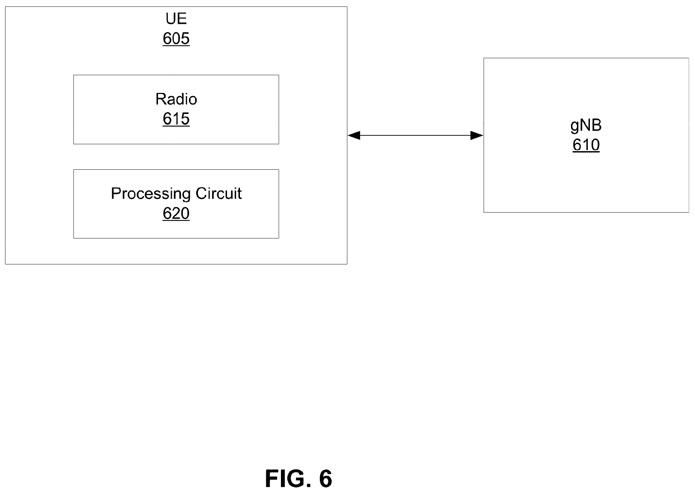

FIG. 6 shows a system including a UE 605 and a gNB 610, in communication with each other. The UE may include a radio 615 and a processing circuit (or a means for processing) 620, which may perform various methods disclosed herein, for example, the method illustrated in FIGs. 1 and/or 3. For example, the processing circuit 620 may receive, via the radio 615, transmissions from the network node (gNB) 610, and the processing circuit 620 may transmit, via the radio 615, signals to the gNB 610.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, for example, a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (for example, multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method performed by a user equipment, UE, (205, 605) the method comprising:
communicating (110), to a base station (610) configured for sub-band full duplex, SBFD, one or more layer 1, L1,-cross link interference, CLI, reporting capabilities, the one or more L1-CLI reporting capabilities including a maximum number of supported L1-CLI measurement resources;
communicating (120), to the base station (610), one or more layer 3, L3,-CLI reporting capabilities, the one or more L3-CLI reporting capabilities including a maximum number of supported L3-CLI measurement resources;
receiving (130), from the base station (610), a CLI reporting configuration;
performing (140) L1-CLI measurements associated with the L1-CLI measurement resources, the L1-CLI measurements based on the CLI reporting configuration;
performing (150) L3-CLI measurements associated with the L3-CLI measurement resources, the L3-CLI measurements based on the CLI reporting configuration;
generating (160) an L1-CLI report including the L1-CLI measurements, the L1-CLI report based on the CLI reporting configuration;
generating (170) an L3-CLI report including the L3-CLI measurements, the L3-CLI report based on the CLI reporting configuration; and
reporting (180, 190), to the base station (610), the L1-CLI report and the L3-CLI report.

2. The method of claim 1, wherein the L1-CLI measurement resources include one or more L1-CLI-received signal strength indicator, RSSI, measurement resources that span a number of non-contiguous resource blocks, RBs, and
wherein the one or more L1-CLI-RSSI measurement resources are counted, based on a non-contiguous scaling factor, toward the maximum number of supported L1-CLI measurement resources.

3. The method of claim 1 or 2, wherein communicating the one or more L1-CLI reporting capabilities and the one or more L3-CLI reporting capabilities comprises communicating a combined CLI capability indicating a maximum number of supported resources across the one or more L1-CLI reporting capabilities and the one or more L3-CLI reporting capabilities.

4. The method of any one of claims 1 to 3, wherein the L1-CLI measurement resources include one or more L1-CLI-sounding reference signal, SRS,-reference signal received power, RSRP, measurement resources measured in an up-link, UL, subband.

5. The method of any one of claims 1 to 4, wherein the L1-CLI measurement resources include one or more L1-CLI-received signal strength indicator, RSSI, measurement resources measured in a down-link, DL, subband, a UL subband, or across two DL subbands.

6. The method of any one of claims 1 to 5, wherein the one or more L1-CLI reporting capabilities include a maximum number of supported L1-CLI-received signal strength indicator, RSSI, resources or a maximum number of supported L1-CLI-sounding reference signal, SRS,-reference signal received power, RSRP, resources.

7. A user equipment, UE, (205, 605) comprising:
at least one processor; and
memory that stores instructions, which when executed by the at least one processor, control the UE (205, 605) to:
communicate (110), to a base station (610) configured for sub-band full duplex, SBFD, one or more layer 1, L1,-cross link interference, CLI, reporting capabilities, the one or more L1-CLI reporting capabilities including a maximum number of supported L1-CLI measurement resources;
communicate (120), to the base station (610), one or more layer 3, L3,-CLI reporting capabilities, the one or more L3-CLI reporting capabilities including a maximum number of supported L3-CLI measurement resources;
receive (130), from the base station (610), a CLI reporting configuration;
perform (140) L1-CLI measurements associated with the L1-CLI measurement resources, the L1-CLI measurements based on the CLI reporting configuration;
perform (150) L3-CLI measurements associated with the L3-CLI measurement resources, the L3-CLI measurements based on the CLI reporting configuration;
generate (160)an L1-CLI report including the L1-CLI measurements, the L1-CLI report based on the CLI reporting configuration;
generate (170) an L3-CLI report including the L3-CLI measurements, the L3-CLI report based on the CLI reporting configuration; and
report (190), to the base station (610), the L1-CLI report and the L3-CLI report.

8. The UE (205, 605) of claim 7, wherein the L1-CLI measurement resources include one or more L1-CLI-received signal strength indicator, RSSI, measurement resources, that span a number of non-contiguous resource blocks, RBs, and
wherein the one or more L1-CLI-RSSI measurement resources are counted, based on a non-contiguous scaling factor, toward the maximum number of supported L1-CLI measurement resources.

9. The UE (205, 605) of claim 7 or 8, wherein the instructions that control the UE to communicate the one or more L1-CLI reporting capabilities and the one or more L3-CLI reporting capabilities comprises instructions to communicate a combined CLI capability indicating a maximum number of supported resources across the one or more L1-CLI reporting capabilities and the one or more L3-CLI reporting capabilities.

10. The UE (205, 605) of any one of claims 7 to 9, wherein the L1-CLI measurement resources include one or more L1-CLI-sounding reference signal, SRS,-reference signal received power, RSRP, measurement resources measured in an up-link, UL, subband.

11. The UE (205, 605) of any one of claims 7 to 10, wherein the L1-CLI measurement resources include one or more L1-CLI-received signal strength indicator, RSSI, measurement resources, measured in a down-link, DL, subband, a UL subband, or across two DL subbands.

12. The UE (205, 605) of any one of claims 7 to 11, wherein the one or more L1-CLI reporting capabilities include a maximum number of supported L1-CLI-received signal strength indicator, RSSI, resources or a maximum number of supported L1-CLI-sounding reference signal, SRS,-reference signal received power, RSRP, resources.

13. A method performed by a user equipment, UE, (205, 605) the method comprising:
communicating (310), to a base station (610) configured for sub-band full duplex, SBFD, one or more cross link interference, CLI, reporting capabilities, the one or more CLI reporting capabilities including a maximum number of supported CLI measurement resources, the maximum number of supported CLI measurement resources including layer 1, L1,-CLI measurement resources and layer 3, L3,-CLI measurement resources;
receiving (320), from the base station (610), a CLI reporting configuration;
performing (330) L1-CLI measurements associated with the L1-CLI measurement resources, the L1-CLI measurements based on the CLI reporting configuration;
performing (340) L3-CLI measurements associated with the L3-CLI measurement resources, the L3-CLI measurements based on the CLI reporting configuration;
generating (350) an L1-CLI report including the L1-CLI measurements, the L1-CLI report based on the CLI reporting configuration;
generating (360) an L3-CLI report including the L3-CLI measurements, the L3-CLI report based on the CLI reporting configuration; and
reporting (370, 380), to the base station (610), the L1-CLI report and the L3-CLI report.

14. The method of claim 13, wherein the L1-CLI measurement resources include one or more L1-CLI-received signal strength indicator, RSSI, measurement resources that span a number of non-contiguous resource blocks, RBs, and
wherein the one or more L1-CLI-RSSI measurement resources are counted, based on a non-contiguous scaling factor, toward the maximum number of supported CLI measurement resources.

15. The method of claim 13 or 14, wherein the maximum number of supported CLI measurement resources is based on a maximum number of L1-CLI measurement resources,
wherein the L3-CLI measurement resources include one or more L3-sounding reference signal, SRS,-reference signal received power, RSRP, measurement resources or one or more L3-CLI-received signal strength indicator, RSSI, measurement resources, and
wherein the L3-CLI measurement resources are counted, based on a scaling factor, toward the maximum number of supported CLI measurement resources.
